# FASCICULE DE BREVET EUROPEEN

(11) **EP 3 941 790 B1**
(45) Date de publication et mention de la délivrance du brevet: **05.06.2024**
(21) Numéro de dépôt: 20721265.5
(22) Date de dépôt: 30.04.2020
(51) Int. Cl.: B60T 7/04, B60T 7/10, B60T 13/74, F16D 51/18, F16D 123/00

(54) **SYSTÈME DE COMMANDE POUR UN FREIN ÉLECTRIQUE AVEC ASSISTANCE HYDRAULIQUE**
STEUERSYSTEM FÜR EINE ELEKTRISCHE BREMSE MIT HYDRAULISCHER UNTERSTÜTZUNG
CONTROL SYSTEM FOR AN ELECTRIC BRAKE WITH HYDRAULIC ASISTANCE

(30) Priorité: 10.05.2019 FR 1904867
(43) Date de publication de la demande: 26.01.2022
(73) Titulaire: Hitachi Astemo France, 93700 Drancy (FR)
(72) Inventeur: PASQUET, Thierry, 94300 VINCENNES (FR)
(74) Mandataire: Brevalex
(86) Numéro de dépôt international: PCT/EP2020/062127
(87) Numéro de publication internationale: WO 2020/229198

(56) Documents cités:
- WO-A2-2015/101564
- DE-A1- 10 345 485
- FR-A1- 2 931 770
- FR-A1- 2 941 757
- FR-A1- 3 031 151

## Description

### DOMAINE TECHNIQUE

L'invention se rapporte à un système de commande pour un système de freinage d'un véhicule routier, le système de freinage comprenant un premier organe de freinage, solidaire en rotation d'une roue du véhicule routier, un deuxième organe de freinage, solidaire en rotation d'une partie fixe d'un châssis du véhicule routier, un actionneur électrique et un actionneur hydraulique, les organes de freinage étant agencés pour pouvoir être déplacés l'un par rapport à l'autre entre une position relâchée, dans laquelle ils n'exercent pas de couple de freinage sur la roue, et une position de freinage, dans laquelle ils exercent un couple de freinage d'amplitude variable sur la roue, l'actionneur électrique et l'actionneur hydraulique étant chacun agencés pour pouvoir générer le couple de freinage d'amplitude variable par déplacement des organes de freinage.

L'invention se rapporte également à un procédé de commande pour un système de freinage d'un véhicule routier et à un programme d'ordinateur apte à mettre en oeuvre ledit procédé.

### ÉTAT DE LA TECHNIQUE ANTÉRIEURE

Un système de freinage de véhicule routier comporte typiquement une première partie appelée « frein de service » et une deuxième partie appelée « frein de stationnement ». Le frein de service a pour fonctions de ralentir le véhicule et de le maintenir à l'arrêt pendant des durées relativement courtes, de l'ordre de quelques secondes à quelques minutes. Le frein de stationnement a pour fonction de maintenir le véhicule automobile à l'arrêt pendant des durées relativement longues, supérieures à quelques minutes. Il est notamment utilisé pour immobilier le véhicule lorsqu'il est stationné. Le frein de service et le frein de stationnement peuvent comporter des organes de freinage en commun et des actionneurs différenciés. En particulier, le système de freinage peut comprendre un premier organe de freinage, solidaire en rotation d'une roue du véhicule routier et un deuxième organe de freinage, solidaire en rotation d'une partie fixe d'un châssis du véhicule routier, les organes de freinage étant agencés pour pouvoir être déplacés l'un par rapport à l'autre entre une position relâchée, dans laquelle ils n'exercent pas de couple de freinage sur la roue du véhicule, et une position de freinage, dans laquelle ils exercent un couple de freinage d'amplitude variable sur la roue du véhicule. Les organes de freinage peuvent être actionnés aussi bien par un actionneur hydraulique que par un actionneur électrique. Du fait de son faible temps de réponse, l'actionneur hydraulique est typiquement utilisé pour le frein de service. L'actionneur électrique, présentant un temps de réponse plus long, est utilisé pour le frein de stationnement. L'actionneur électrique présente en revanche l'avantage de pouvoir présenter un caractère persistant, c'est-à-dire de conserver sa position en l'absence d'alimentation électrique et malgré la contre-réaction exercée par les organes de freinage. Ainsi, un couple de freinage peut être maintenu par l'actionneur électrique sans consommation d'énergie électrique. L'actionneur électrique est donc approprié pour une utilisation en frein de stationnement.

Un inconvénient des freins dits mixtes, c'est-à-dire comportant des organes de freinage communs et des actionneurs différenciés pour le frein de service et le frein de stationnement, est qu'ils présentent un encombrement important, dû à la présence de deux actionneurs, chacun des actionneurs étant dimensionné de manière à pouvoir générer un effort suffisant pour exercer le couple de freinage requis.

L'invention a pour objectif de fournir une solution pour réduire l'encombrement des freins de type mixte tout en assurant la possibilité d'exercer le couple de freinage requis, aussi bien pour la fonction frein de service que pour la fonction frein de stationnement. L'invention a encore pour objectif de fournir un système de freinage dont les coûts de conception, de fabrication et de maintenance sont compatibles avec une utilisation à échelle industrielle.

DE 103 45 485 et WO 2015/101564 divulguent des systèmes de freinage de structure connue.

### EXPOSÉ DE L'INVENTION

À cet effet, l'invention repose sur une action combinée de l'actionneur électrique et de l'actionneur hydraulique pour exercer le couple de freinage requis. Dans une première phase, seul l'actionneur électrique est activé. Les organes de freinage viennent ainsi en contact l'un avec l'autre. Dans une deuxième phase, l'actionneur électrique et l'actionneur hydraulique sont tous deux activés de manière à exercer le couple de freinage requis. Le couple de freinage obtenu peut être supérieur au couple maximal généré individuellement par l'actionneur électrique et au couple maximal généré individuellement par l'actionneur hydraulique.

Plus précisément, un premier objet de l'invention est un système de commande pour un système de freinage d'un véhicule routier. Le système de freinage comprend un premier organe de freinage, solidaire en rotation d'une roue du véhicule routier, un deuxième organe de freinage, solidaire en rotation d'une partie fixe d'un châssis du véhicule routier, un actionneur électrique et un actionneur hydraulique. Les organes de freinage sont agencés pour pouvoir être déplacés l'un par rapport à l'autre entre une position relâchée, dans laquelle ils n'exercent pas de couple de freinage sur la roue, et une position de freinage, dans laquelle ils exercent un couple de freinage d'amplitude variable sur la roue. L'actionneur électrique et l'actionneur hydraulique sont chacun agencés pour pouvoir générer le couple de freinage d'amplitude variable par déplacement des organes de freinage.

Selon l'invention, le système de commande est configuré pour, à la réception d'une consigne de freinage,
- dans une première phase, actionner l'actionneur électrique de sorte qu'il génère un premier couple de freinage dont l'amplitude est strictement inférieure à une amplitude de la consigne de freinage et actionner l'actionneur hydraulique de sorte qu'il génère un deuxième couple de freinage d'amplitude nulle, et
- dans une deuxième phase, successive à la première phase, actionner l'actionneur électrique de sorte qu'il génère un troisième couple de freinage dont l'amplitude est supérieure ou égale à l'amplitude du premier couple de freinage et strictement inférieure à l'amplitude de la consigne de freinage et actionner l'actionneur hydraulique de sorte qu'il génère un quatrième couple de freinage, la somme de l'amplitude du troisième couple de freinage et de l'amplitude du quatrième couple de freinage étant égale à l'amplitude de la consigne de freinage.

Selon une forme particulière de réalisation, le système de freinage comprend un mécanisme de transformation du mouvement agencé pour convertir un mouvement de l'actionneur électrique en un mouvement d'au moins l'un des organes de freinage et pour empêcher qu'un mouvement de l'au moins un organe de freinage soit converti en un mouvement de l'actionneur électrique. Autrement dit, le mécanisme de transformation du mouvement est irréversible. Le système de commande est alors en outre configuré pour, dans une troisième phase, successive à la deuxième phase, actionner l'actionneur électrique et l'actionneur hydraulique de sortent qu'ils génèrent chacun un couple de freinage d'amplitude nulle. Un couple de freinage d'amplitude égale à l'amplitude de la consigne de freinage est néanmoins maintenu par le mécanisme de transformation du mouvement. Cette forme de réalisation est particulièrement adaptée à la fonction de frein de stationnement, dans la mesure où le couple de freinage est maintenu malgré l'absence d'activation des actionneurs, c'est-à-dire malgré l'absence d'alimentation électrique de l'actionneur électrique et de pression dans l'actionneur hydraulique.

Le mécanisme de transformation du mouvement comprend par exemple un système vis-écrou, la vis étant entraînée par l'actionneur électrique et l'écrou étant fixé à l'au moins un des organes de freinage. L'actionneur hydraulique apporte un effort supplémentaire à celui fourni par l'actionneur électrique et permet ainsi d'amener le système vis-écrou dans la position désirée. Une fois atteinte, cette position est maintenue jusqu'à ce que l'actionneur électrique soit commandé en sens inverse.

Un deuxième objet de l'invention est un procédé de commande pour un système de freinage d'un véhicule routier tel que décrit précédemment. Selon l'invention, le procédé de commande comprend les étapes successives suivantes :
- recevoir une consigne de freinage, la consigne de freinage comportant une amplitude de couple de freinage à appliquer sur la roue du véhicule routier,
- dans une première phase, actionner l'actionneur électrique de sorte qu'il génère un premier couple de freinage dont l'amplitude est strictement inférieure à l'amplitude de la consigne de freinage et actionner l'actionneur hydraulique de sorte qu'il génère un deuxième couple de freinage d'amplitude nulle, et
- dans une deuxième phase, actionner l'actionneur électrique de sorte qu'il génère un troisième couple de freinage dont l'amplitude est supérieure ou égale à l'amplitude du premier couple de freinage et strictement inférieure à l'amplitude de la consigne de freinage et actionner l'actionneur hydraulique de sorte qu'il génère un quatrième couple de freinage, la somme de l'amplitude du troisième couple de freinage et de l'amplitude du quatrième couple de freinage étant égale à l'amplitude de la consigne de freinage.

Selon une forme particulière de réalisation du système de commande et du procédé de commande, l'amplitude du troisième couple de freinage est égale à l'amplitude du premier couple de freinage. Autrement dit, l'actionneur électrique est actionné de sorte à générer un couple de freinage restant constant depuis la fin de la première phase à la fin de la deuxième phase. Dans ce cas, l'amplitude du premier couple de freinage correspond par exemple à l'amplitude du couple de freinage maximal pouvant être généré par l'actionneur électrique.

L'actionneur électrique peut être actionné pour générer un couple de freinage d'amplitude croissante au cours de la première phase, l'amplitude du couple de freinage atteignant l'amplitude du premier couple de freinage au plus tard à la fin de la première phase. L'augmentation de l'amplitude du couple de freinage correspond à un rapprochement du premier organe de freinage avec le deuxième organe de freinage.

Par ailleurs, l'actionneur hydraulique peut être actionné pour générer un couple de freinage d'amplitude croissante au cours de la deuxième phase, l'amplitude du couple de freinage atteignant l'amplitude du quatrième couple de freinage au plus tard à la fin de la deuxième phase.

Selon une première variante de réalisation, le système de freinage comprend un frein de type frein à tambour, le premier organe de freinage comprenant un tambour et une piste de frottement formée sur une surface intérieure du tambour présentant une forme cylindrique de révolution, le deuxième organe de freinage comprenant deux segments et deux garnitures de frottement, chaque garniture de frottement étant portée par un segment et étant conformée à la piste de frottement, l'actionneur électrique étant agencé pour pouvoir écarter une première extrémité de chaque segment vers l'extérieur afin d'obtenir un frottement entre les garnitures de frottement et la piste de frottement, l'actionneur hydraulique étant agencé pour pouvoir écarter une deuxième extrémité de chaque segment vers l'extérieur afin d'obtenir un frottement entre les garnitures de frottement et la piste de frottement.

Selon une deuxième variante de réalisation, le système de freinage comprend un frein de type frein à disque, le premier organe de freinage comprenant un disque, le deuxième organe de freinage comprenant deux plaquettes montées chacune sur un étrier de manière à pouvoir coulisser par rapport à l'étrier selon un axe de translation parallèle à un axe de rotation du disque, l'actionneur électrique et l'actionneur hydraulique étant chacun agencés pour permettre de presser les plaquettes contre le disque. Le disque est typiquement pincé entre les deux plaquettes. Au moins une plaquette peut être portée par un piston monté coulissant dans un cylindre de l'étrier.

Un troisième objet de l'invention est un programme d'ordinateur comprenant des instructions qui, lorsque le programme d'ordinateur est exécuté par un ordinateur, conduisent celui-ci à mettre en oeuvre le procédé de commande décrit ci-dessus.

Enfin, un quatrième objet de l'invention est un système de freinage d'un véhicule routier comprenant un premier organe de freinage, solidaire en rotation d'une roue du véhicule routier, un deuxième organe de freinage, solidaire en rotation d'une partie fixe d'un châssis du véhicule routier, un actionneur électrique et un actionneur hydraulique, les organes de freinage étant agencés pour pouvoir être déplacés l'un par rapport à l'autre entre une position relâchée, dans laquelle ils n'exercent pas de couple de freinage sur la roue, et une position de freinage, dans laquelle ils exercent un couple de freinage d'amplitude variable sur la roue, l'actionneur électrique et l'actionneur hydraulique étant chacun agencés pour pouvoir générer le couple de freinage d'amplitude variable par déplacement des organes de freinage. Selon l'invention, le système de freinage comprend, en outre, un système de commande tel que décrit ci-dessus.

Le système de freinage peut comprendre un mécanisme de transformation du mouvement agencé pour convertir un mouvement de l'actionneur électrique en un mouvement d'au moins l'un des organes de freinage et pour empêcher qu'un mouvement de l'au moins un organe de freinage soit converti en un mouvement de l'actionneur électrique.

En particulier, le mécanisme de transformation de mouvement peut comprendre un système vis-écrou, la vis étant entraînée par l'actionneur électrique et l'écrou étant fixé à l'au moins un des organes de freinage.

Selon une première forme particulière de réalisation, le système de freinage comprend un frein de type frein à tambour, le premier organe de freinage comprenant un tambour et une piste de frottement formée sur une surface intérieure du tambour présentant une forme cylindrique de révolution, le deuxième organe de freinage comprenant deux segments et deux garnitures de frottement, chaque garniture de frottement étant portée par un segment et étant conformée à la piste de frottement. L'actionneur électrique est agencé pour pouvoir écarter une première extrémité de chaque segment vers l'extérieur afin d'obtenir un frottement entre les garnitures de frottement et la piste de frottement, et l'actionneur hydraulique est agencé pour pouvoir écarter une deuxième extrémité de chaque segment vers l'extérieur afin d'obtenir un frottement entre les garnitures de frottement et la piste de frottement.

Selon une deuxième forme particulière de réalisation, compatible avec la première, le système de freinage comprend un frein de type frein à disque, le premier organe de freinage comprenant un disque, le deuxième organe de freinage comprenant deux plaquettes montées chacune sur un étrier de manière à pouvoir coulisser par rapport à l'étrier selon un axe de translation parallèle à un axe de rotation du disque, l'actionneur électrique et l'actionneur hydraulique étant chacun agencés pour permettre de presser les plaquettes contre le disque.

### BRÈVE DESCRIPTION DES DESSINS

D'autres caractéristiques, détails et avantages de l'invention ressortiront à la lecture de la description qui va suivre, donnée uniquement à titre d'exemple et faisant référence aux dessins annexés sur lesquels :
- la figure 1 représente schématiquement un exemple de véhicule routier équipé d'un système de freinage apte à être piloté selon un système de commande selon l'invention ;
- la figure 2 représente un exemple de procédé de commande selon l'invention ;
- la figure 3 illustre le fonctionnement du système de freinage de la figure 1 lors de la mise en oeuvre du procédé de commande selon l'invention.

### EXPOSÉ DÉTAILLÉ

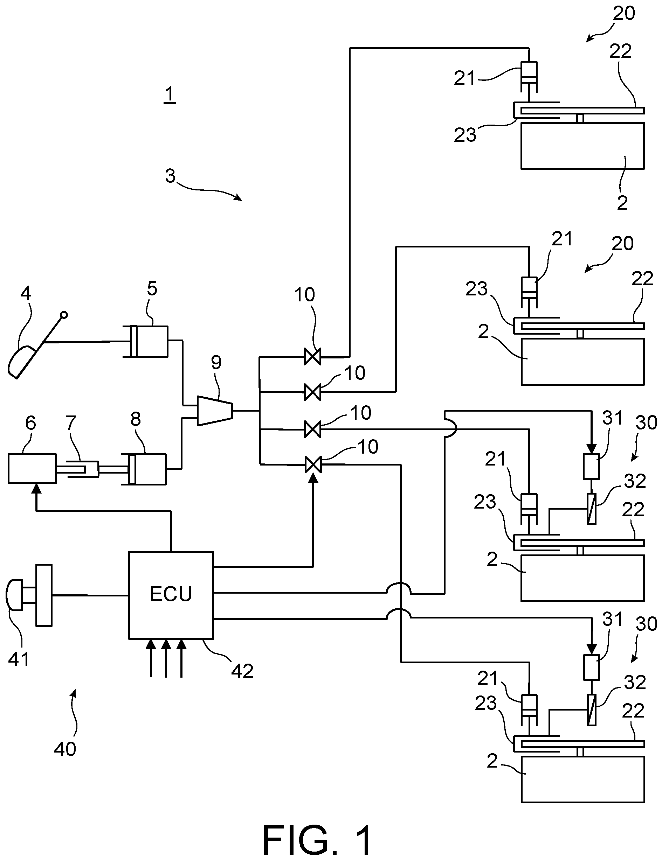

La figure 1 représente schématiquement un exemple de véhicule routier selon l'invention. Le véhicule routier 1 comprend quatre roues 2 et un système de freinage 3. Le système de freinage 3 assure une fonction de freinage de service et une fonction de freinage de stationnement. La fonction de freinage de service consiste à ralentir le véhicule et à le maintenir à l'arrêt pendant des périodes relativement courtes, par exemple inférieures à quelques minutes, sous l'action d'un conducteur du véhicule ou d'un actionneur. La fonction de freinage de stationnement consiste à immobiliser le véhicule sur des périodes relativement longues, par exemple supérieures à quelques minutes, en l'absence d'action du conducteur ou d'un actionneur.

Le système de freinage 3 comprend une pédale de frein 4, un premier maître-cylindre 5, un moteur électrique 6, un système vis-écrou 7, un deuxième maître-cylindre 8, un raccord hydraulique 9, quatre vannes 10, deux freins de service 20 de type frein à disque, deux freins mixtes 30 et un système de commande 40. La pédale de frein 4 est agencée pour pouvoir être pressée par un conducteur du véhicule, de manière à entraîner en translation un piston du premier maître-cylindre et augmenter une pression hydraulique dans le premier maître-cylindre 5. Le moteur électrique 6 est agencé pour pouvoir entraîner en rotation le système vis-écrou 7, de manière à entraîner en translation un piston du deuxième maître-cylindre et augmenter une pression hydraulique dans le deuxième maître-cylindre 8. Le moteur électrique 6, le système vis-écrou 7 et le deuxième maître-cylindre 8 forment ainsi un générateur de pression commandé. Le raccord hydraulique 9 raccorde le premier maître-cylindre 5 et le deuxième maître-cylindre 8 à chacune des vannes 10.

Chaque frein de service 20 est associé à l'une des roues du véhicule, par exemple une roue avant et permet d'assurer la fonction de freinage de service. Il comprend un vérin hydraulique 21, un disque 22 solidaire en rotation de la roue, un étrier 23 disposé à cheval sur un bord extérieur du disque 22 et solidaire en rotation d'une partie fixe d'un châssis du véhicule, et deux plaquettes, non représentées, montées coulissantes sur l'étrier 23 selon un axe de translation parallèle à un axe de rotation de la roue 2. Les vérins hydrauliques 21 sont chacun connectés hydrauliquement aux maîtres-cylindres 5 et 8 par l'intermédiaire d'une vanne 10 et agencés pour entraîner un déplacement des plaquettes. Ils forment des actionneurs hydrauliques du système de freinage 3. Chaque disque 22 et les plaquettes associées forment des organes de freinage aptes à coopérer pour prendre une position de freinage, dans laquelle ils génèrent un couple de freinage sur la roue 2 associée audit frein de service 20, et une position relâchée, dans laquelle ils ne génèrent pas de couple de freinage. Dans la position de freinage, l'amplitude du couple de freinage varie en fonction de la pression hydraulique reçue par le vérin hydraulique 21. La position relâchée correspond à une position de repos du frein de service 20. Les plaquettes peuvent revenir dans la position relâchée sous l'effet d'un ressort de rappel.

Chaque frein mixte 30 est associé à l'une des roues du véhicule, par exemple une roue arrière et permet d'assurer à la fois la fonction de freinage de service et la fonction de freinage de stationnement. Il comprend, de manière identique aux freins de service 20, un vérin hydraulique 21, un disque 22 solidaire en rotation de la roue, un étrier 23 disposé à cheval sur un bord extérieur du disque 22 et solidaire en rotation d'une partie fixe du châssis du véhicule, et deux plaquettes, non représentées, montées coulissantes sur l'étrier 23 selon un axe de translation parallèle à un axe de rotation de la roue 2. Les vérins hydrauliques 21 sont chacun connectés hydrauliquement aux maîtres-cylindres 5 et 8 par l'intermédiaire d'une vanne 10 et sont agencés pour entraîner un déplacement des plaquettes. Ils forment également des actionneurs hydrauliques du système de freinage 3. Chaque disque 22 et les plaquettes associées forment des organes de freinage aptes à coopérer pour prendre une position relâchée ou une position de freinage. Dans la position de freinage, l'amplitude du couple de freinage varie en fonction de la pression hydraulique reçue par le vérin hydraulique 21. Lorsque les organes de freinage des freins mixtes 30 sont entraînés par les vérins hydrauliques 21, ils assurent une fonction de freinage de service. Chaque frein mixte 30 comporte en outre un moteur électrique 31 et un système vis-écrou 32. Le moteur électrique 31 et le système vis-écrou 32 sont agencés pour pouvoir déplacer les plaquettes entre la position relâchée et la position de freinage. Les moteurs électriques 31 forment des actionneurs électriques du système de freinage 3 et les systèmes vis-écrou 32 forment des mécanismes de transformation du mouvement. En l'espèce, ils permettent de transformer un mouvement de rotation des moteurs électriques 31 en un mouvement de translation parallèle aux axes de translation des plaquettes. Avantageusement, chaque système vis-écrou 32 est irréversible, c'est-à-dire qu'il permet de convertir un mouvement et/ou un effort depuis un moteur électrique 31 vers les plaquettes, mais empêche toute conversion de mouvement et d'effort depuis les plaquettes vers le moteur électrique 31. Selon l'invention, le vérin hydraulique 21 et le moteur électrique 31 de chaque frein mixte 30 peuvent être actionnés simultanément de manière à générer un couple de freinage combiné résultant de la somme du couple de freinage généré par le vérin hydraulique 21 et du couple de freinage généré par le moteur électrique 31, comme expliqué ci-dessous. Ce couple de freinage combiné est généré pour assurer une fonction de freinage de stationnement.

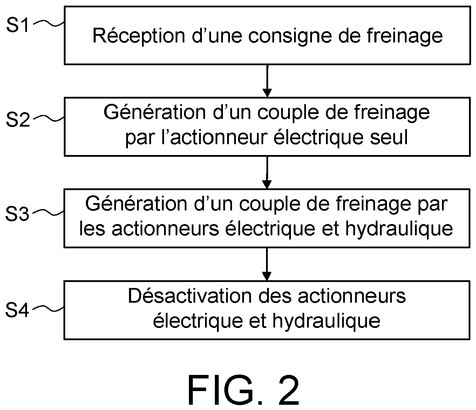

Le système de commande 40 comprend un interrupteur de frein de stationnement 41 et une unité de commande 42. L'interrupteur de frein de stationnement 41 est agencé pour permettre à un conducteur du véhicule d'activer la fonction de freinage de stationnement. Il est par exemple disposé sur un tableau de bord du véhicule. L'actionnement de l'interrupteur de frein de stationnement 41 entraîne la génération d'une consigne de freinage de stationnement. L'unité de commande 42 est agencée pour piloter le système de freinage 3 dans la fonction de freinage de service et dans la fonction de freinage de stationnement. Elle est agencée pour recevoir la consigne de freinage de stationnement et piloter individuellement les vannes 10, le moteur électrique 6 du générateur de pression commandé et les moteurs électriques 31 des freins mixtes 30. En particulier, dans la fonction de freinage de service, l'unité de commande 42 peut piloter l'ouverture et la fermeture des vannes 10 en fonction d'informations extérieures, par exemple en fonction d'une vitesse de rotation des roues 2. L'unité de commande 42 met par exemple en oeuvre un programme de contrôle de la stabilité du véhicule (ESP) et/ou un programme d'antiblocage des roues (ABS), conduisant à piloter individuellement les vannes 10. Dans la fonction de freinage de stationnement, l'unité de commande 42 est agencée pour, à la réception de la consigne de freinage de stationnement, commander le système de freinage 3 en au moins deux phases. Dans une première phase, seuls les moteurs électriques 31 génèrent un couple de freinage. Dans une deuxième phase, un couple de freinage est généré à la fois par les moteurs électriques 31 et par les vérins hydrauliques 21. Le fonctionnement de l'unité de commande 42 est expliqué en détail en référence à la figure 2.

La figure 2 représente un exemple d'étapes du procédé de commande pour le système de freinage 3 de la figure 1. Le procédé comprend les étapes successives suivantes : une étape S1 de réception d'une consigne de freinage, une étape S2 de génération d'un couple de freinage par l'actionneur électrique seul, une étape S3 de génération d'un couple de freinage par les actionneurs électrique et hydraulique, et une étape S4 de désactivation des actionneurs électrique et hydraulique. L'étape S1 de réception d'une consigne de freinage consiste par exemple à recevoir un signal en provenance de l'interrupteur de frein de stationnement 41. Ce signal peut être une consigne de freinage présentant une amplitude prédéterminée F_{target} pour le couple de freinage à appliquer, ou simplement indiquer à l'unité de commande 42 que l'interrupteur de frein de stationnement 41 a été activé. Dans ce dernier cas, la consigne de freinage présentant l'amplitude prédéterminée F_{target} pour le couple de freinage peut être générée par l'unité de commande 42. L'étape S2 de génération d'un couple de freinage par l'actionneur électrique seul est réalisée pendant toute la durée d'une première phase PH1. Pour le système de freinage 3 de la figure 1, elle consiste à actionner les moteurs électriques 31 de sorte qu'ils génèrent chacun un couple de freinage dont l'amplitude est strictement inférieure à l'amplitude prédéterminée F_{target} de la consigne de freinage. Dans un premier temps, l'actionnement des moteurs électriques 31 supprime les jeux fonctionnels entre les organes de freinage, avec un couple nul ou négligeable. L'actionnement des moteurs électriques 31 génère ensuite une augmentation du couple de freinage. L'amplitude du couple de freinage est augmentée jusqu'à atteindre un premier seuil d'amplitude prédéterminée TH1. Ce seuil d'amplitude prédéterminée TH1 correspond par exemple à l'amplitude maximale du couple de freinage pouvant être généré par le seul moteur électrique 31 ou à toute autre amplitude inférieure à cette amplitude maximale. Durant toute la première phase PH1, l'unité de commande 42 commande le système de freinage 3 de sorte que les vérins hydrauliques 21 des freins mixtes 30 ne soient pas actionnés et ne génèrent donc pas de couple de freinage. En pratique, l'unité de commande 42 peut fermer les vannes 10 raccordées aux vérins hydrauliques 21 des freins mixtes 30 et/ou commander le moteur électrique 6 de sorte qu'il ne génère pas de pression hydraulique dans le deuxième maître-cylindre 8. Toute autre solution permettant d'empêcher l'actionnement des vérins hydrauliques 21 des freins mixtes 30 peut être envisagée. L'étape S3 de génération d'un couple de freinage par les actionneurs électrique et hydraulique est réalisée pendant toute la durée d'une deuxième phase PH2, consécutive à la première phase PH1. Pour le système de freinage 3, elle consiste à actionner, dans chaque frein mixte 30, le moteur électrique 31 et le vérin hydraulique 21 de sorte qu'ils génèrent un couple de freinage dont l'amplitude est égale à l'amplitude prédéterminée F_{target} de la consigne de freinage. En particulier, le moteur électrique 31 peut être actionné de manière à continuer à générer un couple de freinage d'amplitude TH1 et le vérin hydraulique 21 peut être actionné de manière à générer un couple de freinage dont l'amplitude est égale à un deuxième seuil d'amplitude prédéterminée TH2, l'amplitude TH2 étant déterminée de sorte que la somme des amplitudes TH1 et TH2 soit égale à l'amplitude prédéterminée F_{target}. L'actionnement de chaque vérin hydraulique 21 génère typiquement une augmentation progressive du couple de freinage généré par ledit vérin hydraulique 21, l'amplitude passant d'une valeur nulle à la valeur TH2. L'étape S4 de désactivation des actionneurs électrique et hydraulique est réalisée pendant une troisième phase PH3, directement consécutive ou non à la deuxième phase PH2. Cette phase PH3 se déroule pendant toute la durée où la fonction de freinage de stationnement doit être réalisée, par exemple jusqu'à ce que l'interrupteur de frein de stationnement 41 soit à nouveau actionné. L'étape S4 consiste à interrompre l'actionnement du moteur électrique 31 et du vérin hydraulique 21. Ces actionneurs ne génèrent alors plus d'effort, mais du fait du caractère irréversible de la transmission de mouvement et d'effort par les systèmes vis-écrou 32, un couple de freinage est maintenu par chacun des freins mixtes 30. La fonction de freinage de stationnement est donc assurée sans consommation d'énergie. Dans le présent exemple de réalisation, il est considéré que le caractère irréversible de la transmission de mouvement et d'effort est obtenu par les systèmes vis-écrou 32. Néanmoins, ce caractère irréversible pourrait être obtenu directement par le moteur électrique 31 ou, plus généralement, par l'actionneur électrique assurant la fonction du moteur électrique 31. Lorsque la fonction de freinage de stationnement n'est plus requise, le moteur électrique 31 peut être actionné en sens inverse afin de relâcher le couple de freinage exercé par les freins mixtes 30.

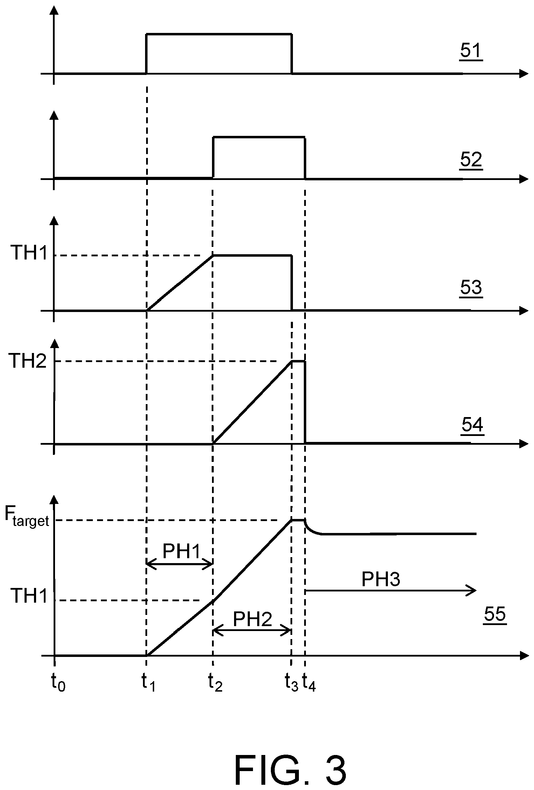

La figure 3 illustre le fonctionnement du système de freinage 3 et en particulier les différents couples de freinage exercés au sein de ce système de freinage. Le premier graphique 51 représente l'état activé ou désactivé des moteurs électriques 31 au cours du temps. Le deuxième graphique 52 représente l'état activé ou désactivé des vérins hydrauliques 21 au cours du temps. Le troisième graphique 53 représente l'amplitude du couple de freinage généré par chaque moteur électrique 31. Le quatrième graphique 54 représente l'amplitude du couple de freinage généré par chaque vérin hydraulique 21. Le cinquième graphique 55 représente l'amplitude du couple de freinage appliqué sur une roue par un frein mixte 30. À un instant initial t₀, le moteur électrique 31 et le vérin hydraulique 21 ne sont pas actionnés et aucun couple de freinage n'est généré. À la réception d'une consigne de freinage à un instant t₁, la première phase PH1 débute et l'amplitude du couple de freinage généré par chaque moteur électrique 31 augmente pendant la phase PH1 jusqu'à atteindre le premier seuil d'amplitude TH1 à un instant t₂. Le procédé de commande passe alors à la deuxième phase PH2 dans laquelle le moteur électrique 31 est actionné de manière à continuer à générer le couple de freinage d'amplitude TH1 et le vérin hydraulique 21 est actionné de manière à générer un couple de freinage dont l'amplitude est égale au deuxième seuil d'amplitude TH2. Au cours de la deuxième phase PH2, l'amplitude du couple de freinage généré par le vérin hydraulique 21 passe de la valeur nulle au deuxième seuil d'amplitude TH2 et l'amplitude du couple de freinage exercé par chaque frein mixte passe de l'amplitude TH1 à l'amplitude prédéterminée F_{target} (TH1 + TH2). Lorsque l'amplitude du couple de freinage exercé par chaque frein mixte atteint l'amplitude prédéterminée F_{target} à un instant t₃, l'actionnement du moteur électrique 31 est interrompu mais l'actionnement du vérin hydraulique 21 est maintenu de manière transitoire jusqu'à un instant t₄. À partir de cet instant t₄, correspondant au début de la troisième phase PH3, les moteurs électriques 31 et les vérins hydrauliques 21 sont désactivés. Aucun effort de freinage n'est alors généré par ces actionneurs. En raison d'un jeu de fonctionnement dans le système vis-écrou 32, un léger relâchement du couple de freinage est observé dans chaque frein mixte. Il est possible de compenser ce relâchement en prévoyant une amplitude F_{target} de couple de freinage supérieure à l'amplitude souhaitée du couple de freinage.

### RÉFÉRENCES

1 véhicule routier
2 roue
3 système de freinage
4 pédale de frein
5 premier maître-cylindre
6 moteur électrique
7 système vis-écrou
8 deuxième maître-cylindre
9 raccord hydraulique
10 vanne
20 frein de service
21 vérin hydraulique, actionneur hydraulique
22 disque, organe de freinage
23 étrier
30 frein mixte
31 moteur électrique, actionneur électrique
32 système vis-écrou
40 système de commande
41 interrupteur de frein de stationnement
42 unité de commande
S1 étape de réception d'une consigne de freinage
S2 étape de génération d'un couple de freinage par l'actionneur électrique seul
S3 étape de génération d'un couple de freinage par les actionneurs électrique et hydraulique
S4 étape de désactivation des actionneurs électrique et hydraulique
PH1 première phase
PH2 deuxième phase
PH3 troisième phase
TH1 premier seuil d'amplitude prédéterminée de couple de freinage
TH2 deuxième seuil d'amplitude prédéterminée de couple de freinage
F_{target} amplitude prédéterminée de consigne de freinage

## Revendications

1. Système de commande pour un système de freinage d'un véhicule routier, le système de freinage (3) comprenant un premier organe de freinage (22), solidaire en rotation d'une roue (2) du véhicule routier, un deuxième organe de freinage, solidaire en rotation d'une partie fixe (23) d'un châssis du véhicule routier, un actionneur électrique (31) et un actionneur hydraulique (21), les organes de freinage (22) étant agencés pour pouvoir être déplacés l'un par rapport à l'autre entre une position relâchée, dans laquelle ils n'exercent pas de couple de freinage sur la roue, et une position de freinage, dans laquelle ils exercent un couple de freinage d'amplitude variable sur la roue, l'actionneur électrique (31) et l'actionneur hydraulique (21) étant chacun agencés pour pouvoir générer le couple de freinage d'amplitude variable par déplacement des organes de freinage,
le système de commande (40) caractérisé en étant configuré pour, à la réception d'une consigne de freinage,
- dans une première phase (PH1), actionner (S2) l'actionneur électrique (31) de sorte qu'il génère un premier couple de freinage dont l'amplitude (TH1) est strictement inférieure à une amplitude (F_{target}) de la consigne de freinage et actionner l'actionneur hydraulique (21) de sorte qu'il génère un deuxième couple de freinage d'amplitude nulle, et
- dans une deuxième phase (PH2), successive à la première phase, actionner (S3) l'actionneur électrique (31) de sorte qu'il génère un troisième couple de freinage dont l'amplitude (TH1) est supérieure ou égale à l'amplitude (TH1) du premier couple de freinage et strictement inférieure à l'amplitude (F_{target}) de la consigne de freinage et actionner l'actionneur hydraulique (21) de sorte qu'il génère un quatrième couple de freinage, la somme de l'amplitude (TH1) du troisième couple de freinage et de l'amplitude (TH2) du quatrième couple de freinage étant égale à l'amplitude (F_{target}) de la consigne de freinage.

2. Système de commande selon la revendication 1, dans lequel, le système de freinage (3) comprenant un mécanisme de transformation du mouvement (32) agencé pour convertir un mouvement de l'actionneur électrique (31) en un mouvement d'au moins l'un des organes de freinage et pour empêcher qu'un mouvement de l'au moins un organe de freinage soit converti en un mouvement de l'actionneur électrique (31), le système de commande (40) est en outre configuré pour, dans une troisième phase (PH3), successive à la deuxième phase (PH2), actionner (S4) l'actionneur électrique (31) et l'actionneur hydraulique (21) de sortent qu'ils génèrent chacun un couple de freinage d'amplitude nulle.

3. Procédé de commande pour un système de freinage d'un véhicule routier, le système de freinage (3) comprenant un premier organe de freinage (22), solidaire en rotation d'une roue (2) du véhicule routier, un deuxième organe de freinage, solidaire en rotation d'une partie fixe (23) d'un châssis du véhicule routier, un actionneur électrique (31) et un actionneur hydraulique (21), les organes de freinage (22) étant agencés pour pouvoir être déplacés l'un par rapport à l'autre entre une position relâchée, dans laquelle ils n'exercent pas de couple de freinage sur la roue, et une position de freinage, dans laquelle ils exercent un couple de freinage d'amplitude variable sur la roue, l'actionneur électrique (31) et l'actionneur hydraulique (21) étant chacun agencés pour pouvoir générer le couple de freinage d'amplitude variable par déplacement des organes de freinage,
le procédé de commande comprenant les étapes successives suivantes :
- recevoir (S1) une consigne de freinage, la consigne de freinage comportant une amplitude (F_{target}) de couple de freinage à appliquer sur la roue (2) du véhicule routier,
- dans une première phase (PH1), actionner (S2) l'actionneur électrique (31) de sorte qu'il génère un premier couple de freinage dont l'amplitude (TH1) est strictement inférieure à l'amplitude (F_{target}) de la consigne de freinage et actionner l'actionneur hydraulique (21) de sorte qu'il génère un deuxième couple de freinage d'amplitude nulle, et
- dans une deuxième phase (PH2), actionner l'actionneur électrique (31) de sorte qu'il génère un troisième couple de freinage dont l'amplitude (TH1) est supérieure ou égale à l'amplitude (TH1) du premier couple de freinage et strictement inférieure à l'amplitude (F_{target}) de la consigne de freinage et actionner l'actionneur hydraulique (21) de sorte qu'il génère un quatrième couple de freinage, la somme de l'amplitude (TH1) du troisième couple de freinage et de l'amplitude (TH2) du quatrième couple de freinage étant égale à l'amplitude (F_{target}) de la consigne de freinage.

4. Système de commande selon l'une des revendications 1 et 2 ou procédé de commande selon la revendication 3, dans lequel l'amplitude (TH1) du troisième couple de freinage est égale à l'amplitude (TH1) du premier couple de freinage.

5. Système de commande selon l'une des revendications 1, 2 et 4 ou procédé de commande selon l'une des revendications 3 et 4, dans lequel l'actionneur électrique (31) est actionné pour générer un couple de freinage d'amplitude croissante au cours de la première phase (PH1), l'amplitude du couple de freinage atteignant l'amplitude (TH1) du premier couple de freinage au plus tard à la fin de la première phase.

6. Système de commande selon l'une des revendications 1, 2, 4 et 5 ou procédé de commande selon la revendication 3, dans lequel l'actionneur hydraulique (21) est actionné pour générer un couple de freinage d'amplitude croissante au cours de la deuxième phase (PH2), l'amplitude du couple de freinage atteignant l'amplitude (TH2) du quatrième couple de freinage au plus tard à la fin de la deuxième phase.

7. Programme d'ordinateur comprenant des instructions qui, lorsque le programme est exécuté par un ordinateur, conduisent celui-ci à mettre en oeuvre le procédé de commande selon l'une des revendications 3 ou 6.

8. Système de freinage d'un véhicule routier comprenant un premier organe de freinage (22), solidaire en rotation d'une roue (2) du véhicule routier, un deuxième organe de freinage, solidaire en rotation d'une partie fixe (23) d'un châssis du véhicule routier, un actionneur électrique (31) et un actionneur hydraulique (21), les organes de freinage (22) étant agencés pour pouvoir être déplacés l'un par rapport à l'autre entre une position relâchée, dans laquelle ils n'exercent pas de couple de freinage sur la roue, et une position de freinage, dans laquelle ils exercent un couple de freinage d'amplitude variable sur la roue, l'actionneur électrique (31) et l'actionneur hydraulique (21) étant chacun agencés pour pouvoir générer le couple de freinage d'amplitude variable par déplacement des organes de freinage, le système de freinage (3) comprenant, en outre, un système de commande (40) selon l'une des revendications 1, 2 et 4 à 6.

9. Système de freinage selon la revendication 8, comprenant un mécanisme de transformation du mouvement (32) agencé pour convertir un mouvement de l'actionneur électrique (31) en un mouvement d'au moins l'un des organes de freinage et pour empêcher qu'un mouvement de l'au moins un organe de freinage soit converti en un mouvement de l'actionneur électrique (31).

10. Système de freinage selon la revendication 9, dans lequel le mécanisme de transformation de mouvement (32) comprend un système vis-écrou, la vis étant entraînée par l'actionneur électrique (31) et l'écrou étant fixé à l'au moins un des organes de freinage.

11. Système de freinage selon l'une des revendications 8 à 10, comprenant un frein de type frein à tambour, le premier organe de freinage comprenant un tambour et une piste de frottement formée sur une surface intérieure du tambour présentant une forme cylindrique de révolution, le deuxième organe de freinage comprenant deux segments et deux garnitures de frottement, chaque garniture de frottement étant portée par un segment et étant conformée à la piste de frottement, l'actionneur électrique étant agencé pour pouvoir écarter une première extrémité de chaque segment vers l'extérieur afin d'obtenir un frottement entre les garnitures de frottement et la piste de frottement, l'actionneur hydraulique étant agencé pour pouvoir écarter une deuxième extrémité de chaque segment vers l'extérieur afin d'obtenir un frottement entre les garnitures de frottement et la piste de frottement.

12. Système de freinage selon l'une des revendications 8 à 11, comprenant un frein de type frein à disque, le premier organe de freinage comprenant un disque (22), le deuxième organe de freinage comprenant deux plaquettes montées chacune sur un étrier (23) de manière à pouvoir coulisser par rapport à l'étrier selon un axe de translation parallèle à un axe de rotation du disque, l'actionneur électrique (31) et l'actionneur hydraulique (21) étant chacun agencés pour permettre de presser les plaquettes contre le disque.

## Patentansprüche

1. Steuersystem für ein Bremssystem eines Straßenfahrzeugs, wobei das Bremssystem (3) ein erstes Bremselement (22), das drehfest mit einem Rad (2) des Straßenfahrzeugs verbunden ist, ein zweites Bremselement, das drehfest mit einem festen Teil (23) eines Fahrgestells des Straßenfahrzeugs verbunden ist, einen elektrischen Aktuator (31) und einen hydraulischen Aktuator (21) umfasst, wobei die Bremselemente (22) so angeordnet sind, dass sie in Bezug zueinander zwischen einer gelösten Position, in der sie kein Bremsmoment auf das Rad ausüben, und einer Bremsposition, in der sie ein Bremsmoment mit variabler Amplitude auf das Rad ausüben, bewegt werden können, wobei der elektrische Aktuator (31) und der hydraulische Aktuator (21) jeweils so angeordnet sind, dass sie das Bremsmoment mit variabler Amplitude durch die Bewegung der Bremselemente erzeugen können,
wobei das Steuersystem (40) **dadurch gekennzeichnet ist, dass** es beim Empfangen eines Bremssollwerts für Folgendes konfiguriert ist:
- in einer ersten Phase (PH1), Betätigen (S2) des elektrischen Aktuators (31), so dass er ein erstes Bremsmoment erzeugt, dessen Amplitude (TH1) strikt kleiner als eine Amplitude (F_{target}) des Bremssollwerts ist, und Betätigen des hydraulischen Aktuators (21), so dass er ein zweites Bremsmoment mit der Amplitude Null erzeugt, und
- in einer zweiten Phase (PH2), die auf die erste Phase folgt, Betätigen (S3) des elektrischen Aktuators (31), so dass er ein drittes Bremsmoment erzeugt, dessen Amplitude (TH1) größer oder gleich der Amplitude (TH1) des ersten Bremsmoments und strikt kleiner als die Amplitude (F_{target}) des Bremssollwerts ist, und Betätigen des hydraulischen Aktuators (21), so dass er ein viertes Bremsmoment erzeugt, wobei die Summe aus der Amplitude (TH1) des dritten Bremsmoments und der Amplitude (TH2) des vierten Bremsmoments gleich der Amplitude (F_{target}) des Bremssollwerts ist.

2. Steuersystem nach Anspruch 1, wobei das Bremssystem (3) einen Bewegungsumwandlungsmechanismus (32) umfasst, der so angeordnet ist, dass er eine Bewegung des elektrischen Aktuators (31) in eine Bewegung mindestens eines der Bremselemente umwandelt und verhindert, dass eine Bewegung des mindestens einen Bremselements in eine Bewegung des elektrischen Aktuators (31) umgewandelt wird, wobei das Steuersystem (40) ferner dazu konfiguriert ist, in einer dritten Phase (PH3), die auf die zweite Phase (PH2) folgt, den elektrischen Aktuator (31) und den hydraulischen Aktuator (21) zu betätigen (S4), so dass sie jeweils ein Bremsmoment mit der Amplitude Null erzeugen.

3. Steuerverfahren für ein Bremssystem eines Straßenfahrzeugs, wobei das Bremssystem (3) ein erstes Bremselement (22), das drehfest mit einem Rad (2) des Straßenfahrzeugs verbunden ist, ein zweites Bremselement, das drehfest mit einem festen Teil (23) eines Fahrgestells des Straßenfahrzeugs verbunden ist, einen elektrischen Aktuator (31) und einen hydraulischen Aktuator (21) umfasst, wobei die Bremselemente (22) so angeordnet sind, dass sie in Bezug zueinander zwischen einer gelösten Position, in der sie kein Bremsmoment auf das Rad ausüben, und einer Bremsposition, in der sie ein Bremsmoment mit variabler Amplitude auf das Rad ausüben, bewegt werden können, wobei der elektrische Aktuator (31) und der hydraulische Aktuator (21) jeweils so angeordnet sind, dass sie das Bremsmoment mit variabler Amplitude durch die Bewegung der Bremselemente erzeugen können,
wobei das Steuerverfahren die folgenden aufeinanderfolgenden Schritte umfasst:
- Empfangen (S1) eines Bremssollwerts, wobei der Bremssollwert eine Amplitude (F_{target}) des auf das Rad (2) des Straßenfahrzeugs anzuwendenden Bremsmoments umfasst,
- in einer ersten Phase (PH1), Betätigen (S2) des elektrischen Aktuators (31), so dass er ein erstes Bremsmoment erzeugt, dessen Amplitude (TH1) strikt kleiner als eine Amplitude (F_{target}) des Bremssollwerts ist, und Betätigen des hydraulischen Aktuators (21), so dass er ein zweites Bremsmoment mit der Amplitude Null erzeugt, und
- in einer zweiten Phase (PH2), Betätigen des elektrischen Aktuators (31), so dass er ein drittes Bremsmoment erzeugt, dessen Amplitude (TH1) größer oder gleich der Amplitude (TH1) des ersten Bremsmoments und strikt kleiner als die Amplitude (F_{target}) des Bremssollwerts ist, und Betätigen des hydraulischen Aktuators (21), so dass er ein viertes Bremsmoment erzeugt, wobei die Summe aus der Amplitude (TH1) des dritten Bremsmoments und der Amplitude (TH2) des vierten Bremsmoments gleich der Amplitude (F_{target}) des Bremssollwerts ist.

4. Steuersystem nach einem der Ansprüche 1 und 2 oder Steuerverfahren nach Anspruch 3, wobei die Amplitude (TH1) des dritten Bremsmoments gleich der Amplitude (TH1) des ersten Bremsmoments ist.

5. Steuersystem nach einem der Ansprüche 1, 2 und 4 oder Steuerverfahren nach einem der Ansprüche 3 und 4, wobei der elektrische Aktuator (31) betätigt wird, um ein Bremsmoment mit während der ersten Phase (PH1) zunehmender Amplitude zu erzeugen, wobei die Amplitude des Bremsmoments spätestens am Ende der ersten Phase die Amplitude (TH1) des ersten Bremsmoments erreicht.

6. Steuersystem nach einem der Ansprüche 1, 2, 4 und 5 oder Steuerverfahren nach Anspruch 3, wobei der hydraulische Aktuator (21) betätigt wird, um ein Bremsmoment mit während der zweiten Phase (PH2) zunehmender Amplitude zu erzeugen, wobei die Amplitude des Bremsmoments spätestens am Ende der zweiten Phase die Amplitude (TH2) des vierten Bremsmoments erreicht.

7. Computerprogramm, das Anweisungen umfasst, die, wenn das Programm von einem Computer ausgeführt wird, diesen dazu veranlassen, das Steuerverfahren nach einem der Ansprüche 3 oder 6 durchzuführen.

8. Bremssystem eines Straßenfahrzeugs, das ein erstes Bremselement (22), das drehfest mit einem Rad (2) des Straßenfahrzeugs verbunden ist, ein zweites Bremselement, das drehfest mit einem festen Teil (23) eines Fahrgestells des Straßenfahrzeugs verbunden ist, einen elektrischen Aktuator (31) und einen hydraulischen Aktuator (21) umfasst, wobei die Bremselemente (22) so angeordnet sind, dass sie in Bezug zueinander zwischen einer gelösten Position, in der sie kein Bremsmoment auf das Rad ausüben, und einer Bremsposition, in der sie ein Bremsmoment mit variabler Amplitude auf das Rad ausüben, bewegt werden können, wobei der elektrische Aktuator (31) und der hydraulische Aktuator (21) jeweils so angeordnet sind, dass sie das Bremsmoment mit variabler Amplitude durch die Bewegung der Bremselemente erzeugen können, wobei das Bremssystem (3) ferner ein Steuersystem (40) nach einem der Ansprüche 1, 2 und 4 bis 6 umfasst.

9. Bremssystem nach Anspruch 8, das einen Bewegungsumwandlungsmechanismus (32) umfasst, der so angeordnet ist, dass er eine Bewegung des elektrischen Aktuators (31) in eine Bewegung mindestens eines der Bremselemente umwandelt und verhindert, dass eine Bewegung des mindestens einen Bremselements in eine Bewegung des elektrischen Aktuators (31) umgewandelt wird.

10. Bremssystem nach Anspruch 9, wobei der Bewegungsumwandlungsmechanismus (32) ein Schrauben-Mutter-System umfasst, wobei die Schraube durch den elektrischen Aktuator (31) angetrieben wird und die Mutter an dem mindestens einen der Bremselemente befestigt ist.

11. Bremssystem nach einem der Ansprüche 8 bis 10, das eine Bremse vom Typ Trommelbremse, wobei das erste Bremselement eine Trommel und eine Reibungsoberfläche umfasst, die auf einer Innenoberfläche der Trommel ausgebildet ist, die eine zylindrische Rotationsform aufweist, wobei das zweite Bremselement zwei Segmente und zwei Reibungsbeläge umfasst, wobei jeder Reibungsbelag von einem Segment getragen wird und an die Reibungsoberfläche angepasst ist, wobei der elektrische Aktuator so angeordnet ist, dass er ein erstes Ende jedes Segments nach außen verdrängen kann, um eine Reibung zwischen den Reibungsbelägen und der Reibungsoberfläche zu erhalten, wobei der hydraulische Aktuator so angeordnet ist, dass er ein zweites Ende jedes Segments nach außen verdrängen kann, um eine Reibung zwischen den Reibungsbelägen und der Reibungsoberfläche zu erhalten.

12. Bremssystem nach einem der Ansprüche 8 bis 11, das eine Bremse vom Typ Scheibenbremse umfasst, wobei das erste Bremselement eine Scheibe (22) umfasst und das zweite Bremselement zwei Bremsbeläge umfasst, die jeweils an einem Bremssattel (23) montiert sind, um im Verhältnis zum Bremssattel entlang einerTranslationsachse parallel zu einer Drehachse der Scheibe gleiten zu können, wobei der elektrische Aktuator (31) und der hydraulische Aktuator (21) jeweils so angeordnet sind, dass sie das Andrücken der Bremsbeläge gegen die Scheibe ermöglichen.

## Claims

1. Control system for a road-vehicle braking system, the braking system (3) comprising a first braking member (22) constrained to rotate with a wheel (2) of the road vehicle, a second braking member constrained to rotate with a fixed part (23) of a chassis of the road vehicle, an electric actuator (31) and a hydraulic actuator (21), the braking members (22) being arranged to be able to be moved with respect to each other between a released position, wherein they do not exert any braking torque on the wheel, and a braking position, wherein they exert a braking torque of variable amplitude on the wheel, the electric actuator (31) and the hydraulic actuator (21) each being arranged to be able to generate the variable-amplitude braking torque by moving the braking members, **characterised in** the control system (40) being configured to, on receiving a braking instruction,
- in a first phase (PH1), actuate (S2) the electric actuator (31) so that it generates a first braking torque the amplitude (TH1) of which is strictly less than an amplitude (F_{target}) of the braking instruction, and actuate the hydraulic actuator (21) so that it generates a second braking torque of zero amplitude, and
- in a second phase (PH2), following the first phase, actuate (S3) the electric actuator (31) so that it generates a third braking torque the amplitude (TH1) of which is greater than or equal to the amplitude (TH1) of the first braking torque and strictly less than the amplitude (F_{target}) of the braking instruction, and actuate the hydraulic actuator (21) so that it generates a fourth braking torque, the sum of the amplitude (TH1) of the third braking torque and of the amplitude (TH2) of the fourth braking torque being equal to the amplitude (F_{target}) of the braking instruction.

2. Control system according to claim 1, wherein, the braking system (3) comprising a movement-transformation mechanism (32) arranged to convert a movement of the electric actuator (31) into a movement of at least one of the braking members and to prevent a movement of the at least one braking member being converted into a movement of the electric actuator (31), the control system (40) is furthermore configured to, in a third phase (PH3), following the second phase (PH2), actuate (S4) the electric actuator (31) and the hydraulic actuator (21) so that they each generate a braking torque of zero amplitude.

3. Control method for a road-vehicle braking system, the braking system (3) comprising a first braking member (22) constrained to rotate with a wheel (2) of the road vehicle, a second braking member constrained to rotate with a fixed part (23) of a chassis of the road vehicle, an electric actuator (31) and a hydraulic actuator (21), the braking members (22) being arranged to be able to be moved with respect to each other between a released position wherein they do not exert any braking torque on the wheel, and a braking position wherein they exert a braking torque of variable amplitude on the wheel, the electric actuator (31) and the hydraulic actuator (21) each being arranged to be able to generate the variable-amplitude braking torque by moving the braking members,
the control method comprising the following successive steps:
- receiving (S1) a braking instruction, the braking instruction including a braking-torque amplitude (F_{target}) to be applied to the wheel (2) of the road vehicle,
- in a first phase (PH1), actuating (S2) the electric actuator (31) so that it generates a first braking torque the amplitude (TH1) up of which is strictly less than the amplitude (F_{target}) of the braking instruction and actuating the hydraulic actuator (21) so that it generates a second braking torque of zero amplitude, and
- in a second phase (PH2), actuating the electric actuator (31) so that it generates a third braking torque the amplitude (TH1) of which is greater than or equal to the amplitude (TH1) of the first braking torque and strictly less than the amplitude (F_{target}) of the braking instruction and actuating the hydraulic actuator (21) so that it generates a fourth braking torque, the sum of the amplitude (TH1) of the third braking torque and of the amplitude (TH2) of the fourth braking torque being equal to the amplitude (F_{target}) of the braking instruction.

4. Control system according to one of claims 1 and 2 or control method according to claim 3, wherein the amplitude (TH1) of the third braking torque is equal to the amplitude (TH1) of the first braking torque.

5. Control system according to one of claims 1, 2 and 4 or control method according to one of claims 3 and 4, wherein the electric actuator (31) is actuated to generate a braking torque of increasing amplitude during the first phase (PH1), the amplitude of the braking torque reaching the amplitude (TH1) of the first braking torque no later than the end of the first phase.

6. Control system according to one of claims 1, 2, 4 and 5 or control method according to claim 3, wherein the hydraulic actuator (21) is actuated to generate a braking torque of increasing amplitude during the second phase (PH2), the amplitude of the braking torque reaching the amplitude (TH2) of the fourth braking torque no later than the end of the second phase.

7. Computer program comprising instructions which, when the program is executed by a computer, cause the latter to implement the control method according to one of claims 3 or 6.

8. Control system for a road vehicle comprising a first braking member (22) constrained to rotate with a wheel (2) of the road vehicle, a second braking member constrained to rotate with a fixed part (23) of a chassis of the road vehicle, an electric actuator (31) and a hydraulic actuator (21), the braking members (22) being arranged to be able to be moved with respect to each other between a released position, wherein they do not exert any braking torque on the wheel, and a braking position, wherein they exert a braking torque of variable amplitude on the wheel, the electric actuator (31) and the hydraulic actuator (21) each being arranged to be able to generate the variable-amplitude braking torque by moving the braking members, the braking system (3) furthermore comprising a control system (40) according to one of claims 1, 2 and 4 to 6.

9. Braking system according to claim 8, comprising a movement-transformation mechanism (32) arranged to convert a movement of the electric actuator (31) into a movement of at least one of the braking members and to prevent a movement of the at least one braking member being converted into a movement of the electric actuator (31).

10. Braking system according to claim 9, wherein the movement-transformation mechanism (32) comprises a screw-nut system, the screw being driven by the electric actuator (31) and the nut being secured to the at least one of the braking members.

11. Braking system according to one of claims 8 to 10, comprising a brake of the drum brake type, the first braking member comprising a drum and a friction track formed on an interior surface of the drum having a shape cylindrical of revolution, the second braking member comprising two segments and two friction linings, each friction lining being carried by a segment and being conformed to the friction track, the electric actuator being arranged to be able to move a first end of each segment away towards the outside in order to obtain friction between the friction linings and the friction track, the hydraulic actuator being arranged to be able to move a second end of each segment away towards the outside in order to obtain friction between the friction linings and the friction track.

12. Braking system according to one of claims 8 to 11, comprising a brake of the disc brake type, the first braking member comprising a disc (22), the second braking member comprising two pads each mounted on a caliper (23) so as to be able to slide with respect to the caliper on a translation axis parallel to a rotation axis of the disc, the electric actuator (31) and the hydraulic actuator (21) each being arranged to make it possible to press the pads against the disc.
